# EUROPEAN PATENT APPLICATION

(11) **EP 4 561 262 A1**
(43) Date of publication of application: **28.05.2025**
(21) Application number: 23894270.0
(22) Date of filing: 05.10.2023
(51) Int. Cl.: H05B 3/42, H05B 3/10, C04B 38/00, F01N 3/027, F01N 3/20, F01N 3/28

(54) **HEAT GENERATING DEVICE**

(30) Priority: 21.11.2022 JP 2022185921
(71) Applicant: NGK Insulators, Ltd., Nagoya-shi, Aichi 467-8530 (JP)
(72) Inventor: YAMASHITA, Masato, Nagoya-shi, Aichi 467-8530 (JP)
(74) Representative: MERH-IP Matias Erny Reichl Hoffmann Patentanwälte PartG mbB
(86) International application number: PCT/JP2023/036366
(87) International publication number: WO 2024/111258

(57) **Abstract**

Provided is a heat generating device in which a first electrode and a second electrode can be provided on a profile surface of a honeycomb structure and in which the honeycomb structure can be configured as a heat generating element. The heat generating device according to an embodiment of the present invention includes a honeycomb structure, a first electrode, and a second electrode. The honeycomb structure includes an outer wall and partition walls. The partition walls are arranged inside the outer wall, and define a plurality of cells extending from a first end surface to a second end surface. The first electrode is provided on a profile surface of the honeycomb structure. The second electrode is provided on the profile surface of the honeycomb structure, and is located away from the first electrode. The profile surface of the honeycomb structure includes: a first portion located between the first electrode and the second electrode; and a second portion located on a side opposite to the first portion with respect to a center of a cross section of the honeycomb structure taken along a direction orthogonal to an extending direction of the cells. The honeycomb structure has a first slit. The first slit extends from the first portion toward the second portion.

## Description

### Technical Field

The present invention relates to a heat generating device.

### Background Art

A honeycomb structure having a plurality of cells allows a fluid to flow through an interior of the cells. Thus, application of the honeycomb structure to filters for use in various industrial products, for example, filters for exhaust gas purification and filters for acid gas adsorption has been considered. In those uses, it may be required to heat the honeycomb structure, for example, in order to activate a catalyst or to desorb acid gases. Accordingly, it has been desired to configure the honeycomb structure itself as a heat generating element. For example, there has been proposed a ceramic heat generating element including: a honeycomb structure made of silicon nitride, a conductive substance, oxide, or oxynitride; and electrodes respectively provided on both end surfaces of the honeycomb structure in an extending direction of cells (see Patent Literature 1). However, in the ceramic heat generating element described in Patent Literature 1, the electrodes provided on the end surfaces of the honeycomb structure may become an obstacle that restricts application to various industrial products.

### Citation List

### Patent Literature

[PTL 1] JP 2000-128637 A

### Summary of Invention

### Technical Problem

The present invention has a main object to provide a heat generating device in which a first electrode and a second electrode can be provided on a profile surface of a honeycomb structure and in which a honeycomb structure can be configured as a heat generating element.

### Solution to Problem

[1] A heat generating device according to an embodiment of the present invention includes a honeycomb structure, a first electrode, and a second electrode. The honeycomb structure includes an outer wall and partition walls. The partition walls are arranged inside the outer wall, and define a plurality of cells extending from a first end surface to a second end surface. The first electrode is provided on a profile surface of the honeycomb structure. The second electrode is provided on the profile surface of the honeycomb structure, and is located away from the first electrode. The profile surface of the honeycomb structure includes: a first portion located between the first electrode and the second electrode; and a second portion located on a side opposite to the first portion with respect to a center of a cross section of the honeycomb structure taken along a direction orthogonal to an extending direction of the cells. The honeycomb structure has a first slit. The first slit extends from the first portion toward the second portion.
[2] In the heat generating device described in the above-mentioned item [1], the honeycomb structure may have a substantially quadrangular shape in the cross section taken along the direction orthogonal to the extending direction of the cells. The honeycomb structure includes: a first profile surface and a second profile surface that are arranged apart from each other in a first direction orthogonal to the extending direction of the cells; and a third profile surface and a fourth profile surface that are arranged apart from each other in a second direction orthogonal to the extending direction of the cells and to the first direction. The first electrode and the second electrode are provided on the first profile surface, and the first profile surface may include the first portion. The second profile surface may include the second portion.
[3] In the heat generating device described in the above-mentioned item [1] or [2], the first slit may have a substantially wedge shape that becomes narrower as the first slit extends away from the first portion in the cross section taken along the direction orthogonal to the extending direction of the cells.
[4] In the heat generating device described in any one of the above-mentioned items [1] to [3], an interior of the first slit may be hollow.
[5] In the heat generating device described in any one of the above-mentioned items [1] to [3], an interior of the first slit may be filled with a filler.
[6] In the heat generating device described in any one of the above-mentioned items [1] to [5], the first slit may comprise a plurality of first slits. The honeycomb structure may further have a second slit. The second slit extends from the second portion toward the first portion. The second slit is located between first slits arranged adjacent to each other among the plurality of first slits.
[7] In the heat generating device described in the above-mentioned item [6], a sum of the number of the first slits located between the first electrode and the second electrode and the number of the second slit located between the first electrode and the second electrode may be an odd number.
[8] In the heat generating device described in the above-mentioned item [6] or [7], the second slit may have a substantially wedge shape that becomes narrower as the second slit extends away from the second portion in the cross section taken along the direction orthogonal to the extending direction of the cells.
[9] In the heat generating device described in any one of the above-mentioned items [6] to [8], an interior of the second slit may be hollow.
[10] In the heat generating device described in any one of the above-mentioned items [6] to [8], an interior of the second slit may be filled with a filler.
[11] In the heat generating device described in any one of the above-mentioned items [1] to [10], the honeycomb structure may be made of a conductive ceramic material.

### Advantageous Effects of Invention

According to an embodiment of present invention, it is possible to achieve the heat generating device in which the first electrode and the second electrode can be provided on the profile surface of the honeycomb structure and in which the honeycomb structure can be configured as a heat generating element.

### Brief Description of Drawings

FIG. **1** is a schematic plan view of a heat generating device according to one embodiment of the present invention.
FIG. **2** is a sectional view of the heat generating device taken along the line II-II' of FIG. **1****.**
FIG. **3** is a schematic plan view of a heat generating device according to another embodiment of the present invention.
FIG. **4** is an enlarged view of a first slit of FIG. **3****.**
FIG. **5** is an enlarged view of the first slit in a modification example.
FIG. **6** is a schematic plan view of a heat generating device according to still another embodiment of the present invention.
FIG. **7** is a schematic plan view of a heat generating device according to still another embodiment of the present invention.
FIG. 8 is a schematic plan view of a heat generating device according to still another embodiment of the present invention.
FIG. 9 is a schematic plan view of a heat generating device according to still another embodiment of the present invention.
FIG. 10 is a schematic plan view of a heat generating device according to still another embodiment of the present invention.
FIG. 11 is a schematic plan view of a heat generating device according to still another embodiment of the present invention.

### Description of Embodiments

Embodiments of the present invention are described below with reference to the drawings. However, the present invention is not limited to these embodiments. In addition, in the drawings, the width, thickness, shape, and the like of each portion may be schematically illustrated as compared to those in the embodiments in order to provide clearer description, but the drawings are merely examples and do not limit the interpretation of the present invention.

### A. Outline of Heat Generating Device

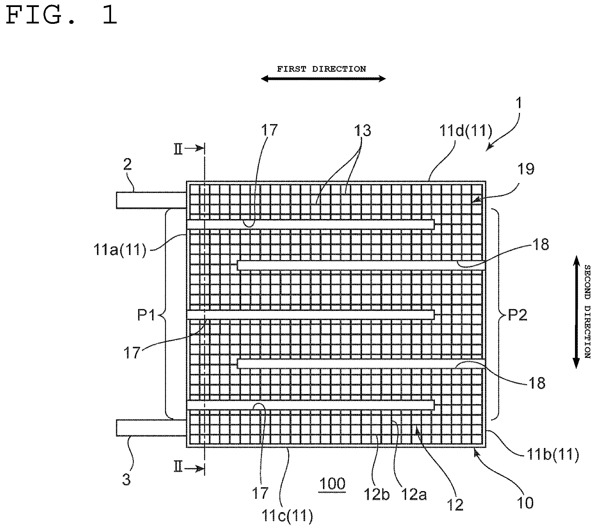

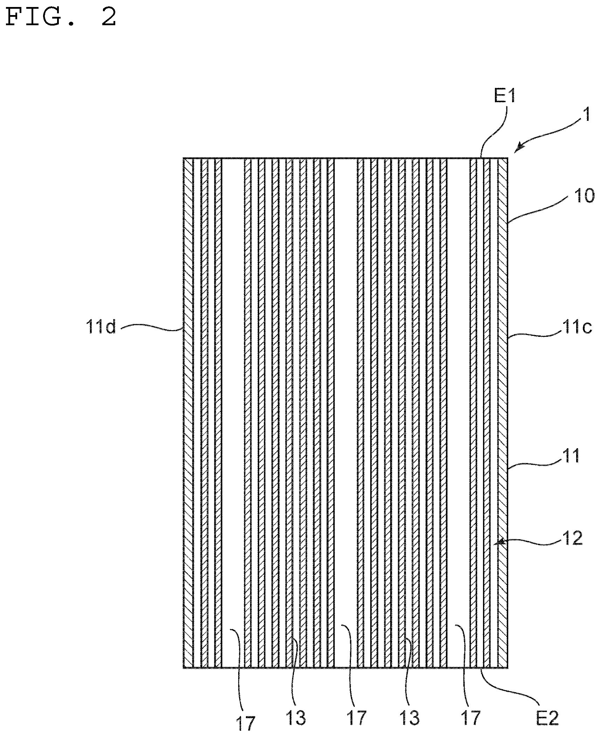

FIG. **1** is a schematic plan view of a heat generating device according to one embodiment of the present invention. FIG. **2** is a sectional view of the heat generating device taken along the line II-II' of FIG. **1****.**

A heat generating device **100** in the illustrated example includes a honeycomb structure **1,** a first electrode **2,** and a second electrode **3.** The honeycomb structure **1** includes an outer wall **10** and partition walls **12.** The partition walls **12** are arranged inside the outer wall **10,** and define a plurality of cells **13.** Each of the plurality of cells **13** extends from a first end surface **E1** to a second end surface **E2** of the honeycomb structure **1** (see FIG. **2**). Typically, the cells **13** allow a fluid according to the use of the heat generating device to flow therethrough. Typically, a profile surface **11** of the honeycomb structure **1** is located between the first end surface **E1** and the second end surface **E2**, and extends in parallel to an extending direction of the cells **13.** The profile surface **11** of the honeycomb structure **1** is an external surface of the outer wall **10.** Herein, unless otherwise mentioned, the profile surface **11** of the honeycomb structure **1** means an entire surface that is located between the first end surface **E1** and the second end surface **E2** and extends in parallel to the cells **13.** The first electrode **2** is provided on the profile surface **11** of the honeycomb structure **1.** The second electrode **3** is provided on the profile surface **11** of the honeycomb structure **1,** and is located away from the first electrode **2.** The profile surface **11** of the honeycomb structure **1** includes: a first portion **P1** located between the first electrode **2** and the second electrode **3**; and a second portion **P2** located on a side opposite to the first portion **P1** with respect to a center of a cross section of the honeycomb structure **1** taken along a direction orthogonal to the extending direction of the cells **13.** The first portion **P1** and the second portion **P2** are in a 180-degree rotationally symmetric relationship with respect to a center axis of the honeycomb structure **1.** The honeycomb structure **1** has a first slit **17.** The first slit **17** extends from the first portion **P1** toward the second portion **P2** of the profile surface **11.** The first slit **17** functions as an electrical insulating portion.

With this configuration, the first slit extends from the first portion located between the first electrode and the second electrode on the profile surface of the honeycomb structure, and hence even when the first electrode and the second electrode are provided on the profile surface of the honeycomb structure, a short circuit between the first electrode and the second electrode can be prevented. Thus, application of voltage to the honeycomb structure through the first electrode and the second electrode can cause the honeycomb structure to generate heat stably. That is, the first electrode and the second electrode can be provided on the profile surface of the honeycomb structure, and the honeycomb structure can be configured as a heat generating element. As a result, the heat generating device according to one embodiment of the present invention may be also applied to industrial products to which it is difficult to apply a heat generating device in which the electrodes are provided on the end surfaces of the honeycomb structure. Accordingly, applicability to various industrial products can be improved.

As a shape of the honeycomb structure **1** in the cross section taken along the direction orthogonal to the extending direction of the cells **13,** any suitable shape may be adopted. For example, the sectional shape of the honeycomb structure may be triangular, quadrangular, pentagonal, hexagonal or a polygonal shape having more than six sides, circular, or oval. A size of the honeycomb structure may be set appropriately in accordance with the purpose.

In one embodiment, the honeycomb structure **1** is substantially quadrangular in the cross section taken along the direction orthogonal to the extending direction of the cells **13.** In the illustrated example, the honeycomb structure **1** has a rectangular column shape having a quadrangular bottom surface.

The honeycomb structure **1** includes: a first profile surface **11a** and a second profile surface **11b** that are arranged apart from each other in a first direction orthogonal to the extending direction of the cells **13;** and a third profile surface **11c** and a fourth profile surface **11d** that are arranged apart from each other in a second direction orthogonal to the extending direction of the cells **13** and to the first direction. In other words, the profile surface **11** of the honeycomb structure **1** includes the first profile surface **11a,** the second profile surface **11b,** the third profile surface **11c**, and the fourth profile surface **11d.**

In one embodiment, the first electrode **2** and the second electrode **3** are provided on the first profile surface **11a** of the honeycomb structure **1.** The first profile surface **11a** includes the first portion **P1** located between the first electrode **2** and the second electrode **3** in the second direction. The second profile surface **11b** on a side opposite to the first profile surface **11a** includes the second portion **P2.** The first slit **17** extends from the first portion **P1** of the first profile surface **11a** toward the second portion **P2** of the second profile surface **11b.** With this configuration, the first slit can stably prevent a short circuit between the first electrode and the second electrode even when the first electrode and the second electrode are provided on the same profile surface among the four profile surfaces of the honeycomb structure having a rectangular column shape.

In the illustrated example, the first slit **17** extends in the first direction. A proximal end of the first slit **17** is located in the first portion **P1** on the first profile surface **11a** of the honeycomb structure **1,** and a distal end of the first slit **17** is located between the first portion **P1** and the second portion **P2** without reaching the second portion **P2.** That is, the distal end of the first slit **17** is located away from the second portion **P2** on the second profile surface **11b.**

As a length of the first slit **17** (dimension in the first direction in the illustrated example), any suitable value may be adopted in accordance with the size of the honeycomb structure. The length of the first slit **17** is, for example, 1 times or more, preferably 5 times or more, and for example, 25 times or less, preferably 15 times or less, a distance between the distal end of the first slit and the second portion. When the length of the first slit falls within the above-mentioned ranges, a length of a conductor **19,** which electrically connects the first electrode and the second electrode to each other, can be sufficiently secured. When the length of the slit is below the above-mentioned lower limit, heat is generated non-uniformly (heat is not generated to four corners) in some cases. When the length of the slit exceeds the above-mentioned upper limit, strength is impaired in some cases.

The number of the first slit **17** is not particularly limited. The number of the first slit **17** is, for example, 1 or more, preferably 2 or more, more preferably 3 or more, for example, 20 or less. When the number of slits is too large, an interval between slits becomes too narrow, with the result that strength is impaired in some cases.

In one embodiment, a plurality of first slits **17** are formed. Typically, the plurality of first slits **17** are arranged apart from each other in a direction orthogonal to an extending direction of the first slits. In the illustrated example, three first slits **17** are arranged apart from each other in the second direction.

The honeycomb structure **1** further has a second slit **18.** Similarly to the first slit **17,** the second slit **18** functions as an electrical insulating portion. The second slit **18** is located between first slits **17** arranged adjacent to each other among the plurality of first slits **17.** The second slit **18** extends from the second portion **P2** toward the first portion **P1** on the profile surface **11** of the honeycomb structure **1.** The honeycomb structure **1** is configured by the first slit **17** and the second slit **18** as the conductor **19** that electrically connects the first electrode **2** and the second electrode **3** to each other. The conductor **19** is formed into a zigzag shape when viewed from an axial direction of the honeycomb structure **1.** Accordingly, voltage can be applied uniformly to the entire honeycomb structure through the first electrode and the second electrode, thereby being capable of causing the entire honeycomb structure to generate heat uniformly.

Typically, one second slit **18** is arranged between each pair of the first slits **17** arranged adjacent to each other. In the illustrated example, the second slit **18** extends from the second portion **P2** of the second profile surface **11b** toward the first portion **P1** of the first profile surface **11a** in the first direction. A proximal end of the second slit **18** is located in the second portion **P2** on the second profile surface **11b** of the honeycomb structure **1,** and a distal end of the second slit **18** is located between the second portion **P2** and the first portion **P1** without reaching the first portion **P1.** That is, the distal end of the second slit **18** is located away from the first portion **P1** on the first profile surface **11a.**

As a length of the second slit **18** (dimension in the first direction in the illustrated example), any suitable value may be adopted in accordance with the size of the honeycomb structure. The length of the second slit **18** is, for example, 1 times or more, preferably 5 times or more and, for example, 25 times or less, preferably 15 times or less, a distance between the distal end of the second slit and the first portion. When the length of the second slit falls within the above-mentioned ranges, the conductor that electrically connects the first electrode and the second electrode to each other can be stably formed into a zigzag shape.

The number of the second slit **18** is, for example, 1 or more, preferably the number obtained by subtracting 1 from the number of the first slits. The sum of the number of the first slits **17** located between the first electrode **2** and the second electrode **3** and the number of the second slits **18** located between the first electrode **2** and the second electrode **3** is preferably an odd number. In the illustrated example, the sum of the number of the first slits **17** located between the first electrode **2** and the second electrode **3** and the number of the second slits **18** located between the first electrode **2** and the second electrode **3** is 5. When the total number of the first slits and the second slits located between the first electrode and the second electrode is an odd number, the conductor that electrically connects the first electrode and the second electrode to each other can be stably formed into a zigzag shape.

Any suitable configuration may be adopted for each of the first slit **17** and the second slit **18** as long as each of the first slit **17** and the second slit **18** functions as an electrical insulating portion.

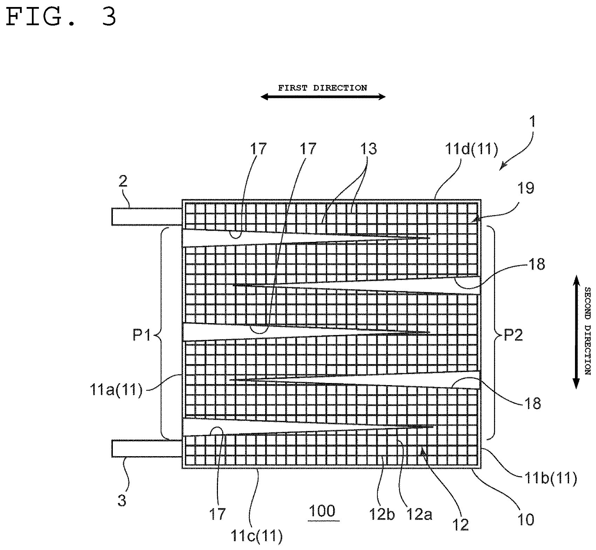

Each of the first slit **17** and the second slit **18** has any suitable shape in the cross section taken along the direction orthogonal to the axial direction of the honeycomb structure **1.** For example, the sectional shape of each of the first slit **17** and the second slit **18** may be a substantially rectangular shape (see FIG. **1**) or a substantially wedge shape (see FIG. **3**).

As illustrated in FIG. **1**, when the sectional shape of the slit (first slit or second slit) is a substantially rectangular shape, a width of the slit (dimension in the second direction in the illustrated example) is substantially constant throughout the slit.

As the dimension in a width direction of the slit (first slit or second slit) having a substantially rectangular shape, any suitable value may be adopted in accordance with the voltage to be applied to the first electrode and the second electrode. The width of the slit (first slit or second slit) having a substantially rectangular shape is, for example, 0.05 cm or more, preferably 0.1 cm or more. When the width of the slit having a substantially rectangular shape is equal to or larger than the above-mentioned lower limit, it is possible to stably prevent a short circuit of the conductor that electrically connects the first electrode and the second electrode to each other. Typically, the width of the slit having a substantially rectangular shape is 1.0 cm or less. When the slit width exceeds the above-mentioned upper limit, a region to be filled with a filler increases, and a pressure loss increases in some cases. Further, when the slit width is below the above-mentioned lower limit, a sufficient insulation distance is not obtained in some cases.

As illustrated in FIG. **3****,** when the sectional shape of the first slit **17** is a substantially wedge shape, the first slit **17** becomes narrower as the first slit **17** extends away from the first portion **P1**. A range of a width of the proximal end of the first slit **17** (dimension in the second direction in the illustrated example) is the same as a range of the width of the above-mentioned slit having a rectangular shape. With this configuration, the width of the first slit may be appropriately adjusted in accordance with a magnitude of a potential difference in the conductor. In the conductor that electrically connects the first electrode and the second electrode to each other, a potential difference between a portion to which the electrode (first electrode or second electrode) is directly connected and a turning portion located between the distal end of the second slit and the first portion is liable to be relatively large. In this respect, the width of the proximal end of the first slit is equal to or larger than the above-mentioned lower limit, and hence it is possible to stably prevent a short circuit between portions with a relatively large potential difference. Further, the width of the first slit located between portions in which the potential difference is relatively small in the conductor can be set to be smaller than that of the proximal end of the first slit. Accordingly, an area occupied by the first slit in the cross section of the honeycomb structure can be reduced as compared to the case in which the sectional shape of the first slit is a substantially rectangular shape, and in turn, the area occupied by the plurality of cells can be increased.

A taper angle of the distal end of the first slit **17** having a substantially wedge shape is, for example, 0.5° or more, preferably 1.0° or more, and for example, 12.0° or less, preferably 3.0° or less. When the taper angle is below the above-mentioned lower limit, the slit width becomes too small, which results in an insufficient insulation distance in some cases. When the taper angle exceeds the above-mentioned upper limit, the slit width at a base of the slit becomes larger, which results in a larger pressure loss and a smaller surface area in some cases.

When the sectional shape of the second slit **18** is a substantially wedge shape, the second slit **18** becomes narrower as the second slit **18** extends away from the second portion **P2.** A range of a width of the proximal end of the second slit **18** (dimension in the second direction in the illustrated example) is the same as the range of the width of the above-mentioned slit having a rectangular shape. With this configuration, the width of the second slit may be appropriately adjusted in accordance with a magnitude of a potential difference in the conductor. In the conductor that electrically connects the first electrode and the second electrode to each other, a potential difference between turning portions located between the distal end of the first slit and the second portion is liable to be relatively large. In this respect, the width of the proximal end of the second slit is equal to or larger than the above-mentioned lower limit, and hence it is possible to stably prevent a short circuit between portions with a relatively large potential difference. Further, the width of the second slit located between portions in which the potential difference is relatively small in the conductor can be set to be smaller than that of the proximal end of the second slit. Accordingly, an area occupied by the second slit in the cross section of the honeycomb structure can be reduced as compared to the case in which the sectional shape of the second slit is a substantially rectangular shape, and in turn, the area occupied by the plurality of cells can be increased.

A range of a taper angle of the distal end of the second slit **18** having a substantially wedge shape is the same as the range of the taper angle of the distal end of the first slit **17** described above.

In one embodiment, the first slit **17** and the second slit **18** have substantially wedge shapes that are opposed to and congruent with each other in the cross section taken along the direction orthogonal to the axial direction of the honeycomb structure 1. When the first slit and the second slit have the substantially wedge shapes that are congruent with each other, the end surface of the first slit and the end surface of the second slit that are located adjacent to each other can be arranged substantially in parallel to each other, and hence the width of the conductor formed between the slits can be made constant. Accordingly, when voltage is applied to the honeycomb structure through the first electrode and the second electrode, the honeycomb structure can be caused to generate heat more uniformly.

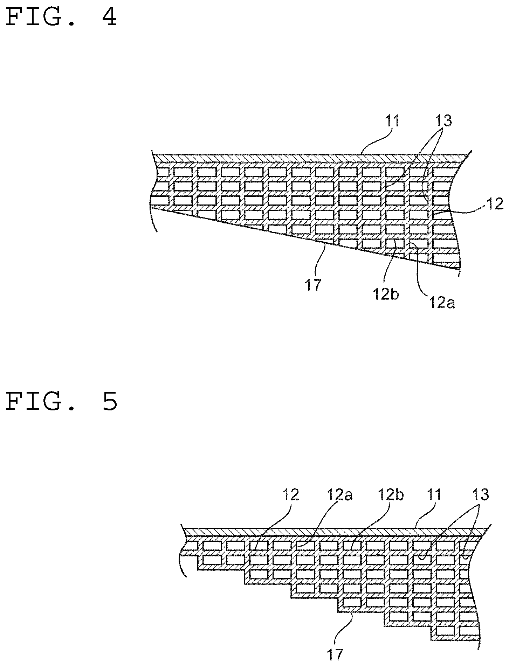

The slit (first slit or second slit) having a substantially wedge shape may be formed by linearly cutting out the partition walls **12** so that the slit becomes narrower toward the distal end (see FIG. **4**), or may be formed by removing the partition walls **12** in a stepped manner (see FIG. **5**).

Although not shown, the sectional shape of any one of the first slit **17** and the second slit **18** can be a substantially rectangular shape, and the sectional shape of the other of the first slit **17** and the second slit **18** can be a substantially wedge shape.

As illustrated in FIG. **2****,** typically, the first slit **17** is formed throughout the honeycomb structure **1** in the extending direction of the cells **13** (that is, from the first end surface **E1** to the second end surface **E2**). Further, although not shown, typically, the second slit **18** is also formed throughout the honeycomb structure **1** in the extending direction of the cells **13.**

In one embodiment, an interior of each of the first slit **17** and the second slit **18** is hollow. In this embodiment, the air is present inside each of the first slit and the second slit. Accordingly, the first slit and the second slit can function stably as electrical insulating portions.

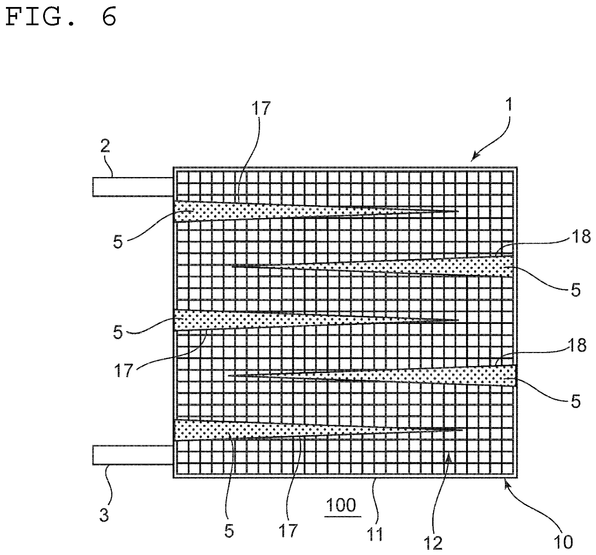

Further, as illustrated in FIG. 6, an interior of each of the first slit **17** and the second slit **18** may be filled with the filler **5.** When the first slit and the second slit are filled with the filler, the strength of the honeycomb structure can be improved. Further, when the first slit and the second slit are filled with the filler, the fluid can be prevented from flowing into the slits when the fluid according to the use of the heat generating device is caused to flow through the cells. Accordingly, the fluid can be caused to stably flow through the cells. Although not shown, the interior of the first slit may be hollow, and the interior of the second slit may be filled with the filler. Alternatively, the interior of the second slit may be hollow, and the interior of the first slit may be filled with the filler.

The filler **5** may be filled throughout the first slit 17 and/or the second slit, or may be filled only in a part of the first slit **17** and/or the second slit. For example, when the filler is filled in an end portion of the first end surface side (inflow end surface side) in the slit (first slit or second slit), the fluid can be prevented from flowing into the slit. Further, when the filler is filled throughout the slit, the strength of the honeycomb structure can be sufficiently improved, and the inflow of the fluid into the slit can be more stably prevented.

A volume resistance value of the filler at 25°C is, for example, more than 1.0×10¹¹ Ω·cm, preferably 1.0×10¹³ Ω·cm or more. A typical example of the filler is an insulating ceramic material. Examples of the insulating ceramic material include aluminum nitride, aluminum oxide, silicon nitride, zirconia silicon carbide, cordierite, and mullite. The fillers may be used alone or in combination thereof.

### B. Modification Examples of Heat Generating Device

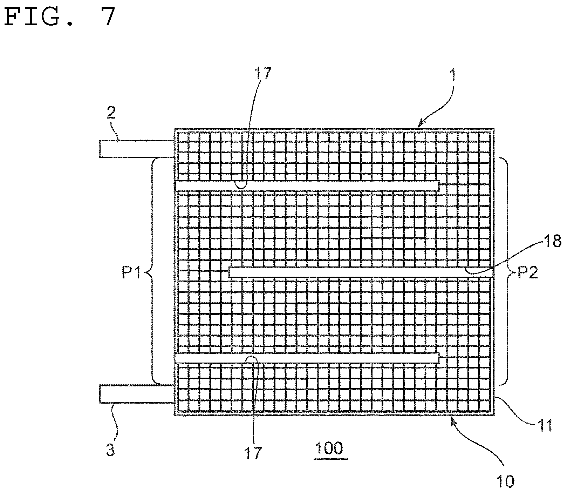

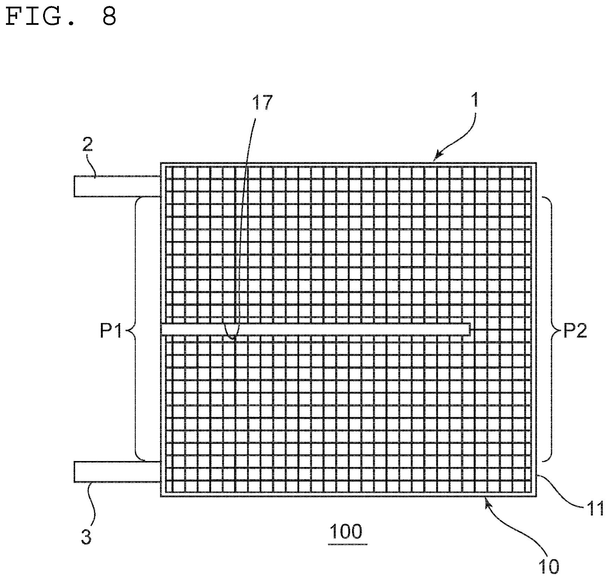

The honeycomb structure **1** illustrated in FIG. **1** to FIG. **6** has a plurality of second slits **18.** As described above, the number of the second slits **18** is not limited thereto. As illustrated in FIG. **7****,** there may be only one second slit **18.** Further, as illustrated in FIG. **8****,** the honeycomb structure **1** may have only the first slit **17** without the second slit **18.**

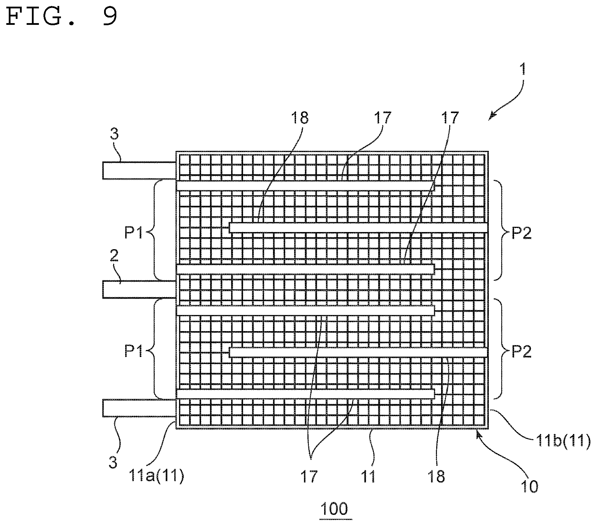

The heat generating device illustrated in FIG. **1** to FIG. **8** includes one first electrode and one second electrode. The number of electrodes is not limited thereto. As illustrated in FIG. **9****,** the heat generating device **100** may include a plurality of first electrodes and/or second electrodes. In this case, the profile surface **11** of the honeycomb structure **1** includes a plurality of first portions **P1** and a plurality of second portions **P2.** In the illustrated example, one first electrode **2** and two second electrodes **3** are provided on the first profile surface **11a** of the honeycomb structure **1,** and the first electrode **2** is arranged between the two second electrodes **3.** The sum of the number of the first slits **17** located between the first electrode **2** and each second electrode **3** and the number of the second slit **18** located between the first electrode **2** and each second electrode **3** is an odd number, specifically 3.

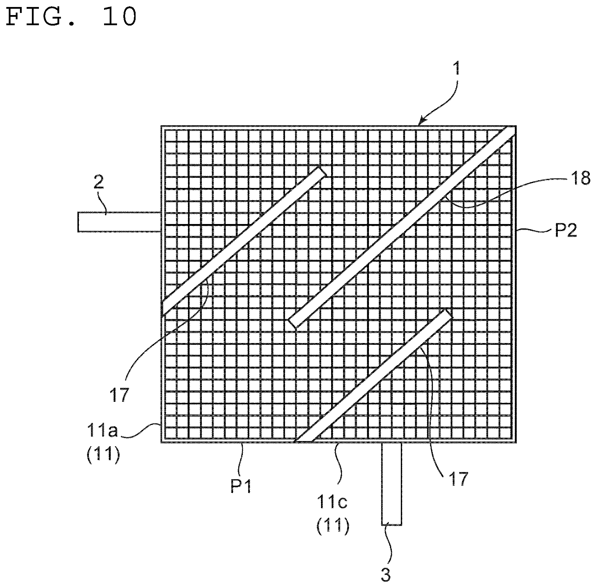

In the heat generating device illustrated in FIG. **1** to FIG. **9****,** the first electrode and the second electrode are arranged on the same profile surface among the four profile surfaces of the honeycomb structure having a rectangular column shape. The arrangement of the first electrode and the second electrode is not limited thereto. As illustrated in FIG. **10****,** the first electrode **2** and the second electrode **3** may be respectively arranged on different profile surfaces among the four profile surfaces of the honeycomb structure having a rectangular column shape. In the illustrated example, the first electrode **2** is arranged on the first profile surface **11a** of the honeycomb structure **1,** and the second electrode **3** is arranged on the third profile surface **11c** of the honeycomb structure **1.**

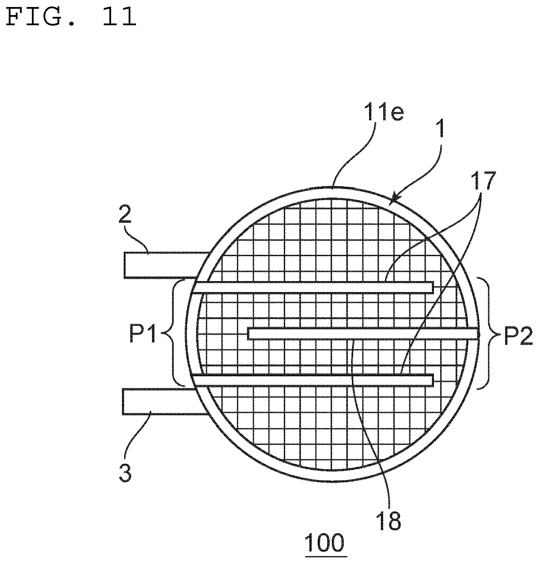

In the heat generating device **100** illustrated in FIG. **1** to FIG. **10****,** the honeycomb structure **1** has a substantially quadrangular shape in the cross section taken along the direction orthogonal to the extending direction of the cells **13.** As described above, the sectional shape of the honeycomb structure is not limited thereto. In one embodiment, as illustrated in FIG. **11****,** the honeycomb structure **1** has a substantially circular shape in the cross section taken along the direction orthogonal to the extending direction of the cells **13.** In this embodiment, the honeycomb structure has a circular column shape having a circular bottom surface. In this case, the first electrode **2** and the second electrode **3** are arranged on an outer peripheral surface **11e** as the profile surface of the honeycomb structure **1.** The outer peripheral surface **11e** of the honeycomb structure **1** includes: the first portion **P1** that is located between the first electrode **2** and the second electrode **3** in a circumferential direction of the honeycomb structure **1;** and the second portion **P2** that is located on a side opposite to the first portion **P1** with respect to a center axis of the honeycomb structure **1.**

Specific configurations of the honeycomb structure, the first electrode, and the second electrode are described below.

### C. Honeycomb Structure

The honeycomb structure **1** is a flow-through honeycomb structure including the plurality of cells **13.**

The cells **13** each have any suitable shape in the cross section taken along the direction orthogonal to the axial direction of the honeycomb structure **1.** For example, the sectional shape of the cell may be triangular, quadrangular, pentagonal, hexagonal or a polygonal shape having more than six sides, circular, or oval. The sectional shapes and sizes of the cells may all be identical or at least partially different. Among such sectional shapes of the cells, a quadrangular shape is preferred, and a square or rectangle is more preferred.

In one embodiment, an interior space of the cell **13** is configured as a flow passage through which the fluid according to the use of the heat generating device **100** flows.

A cell density (that is, the number of the cells **13** per unit area) in the cross section taken along the direction orthogonal to a length direction of the honeycomb structure may be set appropriately in accordance with the purpose. The cell density may be, for example, from 4 cells/cm² to 320 cells/cm². When the cell density falls within such a range, the strength and an effective geometric surface area (GSA) of the honeycomb structure can be sufficiently ensured.

Typically, the honeycomb structure **1** is made of a conductive ceramic material. With this configuration, the honeycomb structure can be stably configured as a heat generating element.

Typically, a volume resistance value of the conductive ceramic material at 25°C is 10 Ω·cm or less, preferably 1 Ω·cm or less. Examples of the conductive ceramic material include a conductive zirconia-based material, an alumina-titanium carbide-based composite material, a Si-SiC-based composite material, and a Si metal impregnated Si-SiC-based composite material. Of those, a Si-SiC-based composite material is preferred. The conductive ceramic materials may be used alone or in combination thereof.

As described above, the honeycomb structure **1** includes the outer wall **10** and the partition walls **12.** In the illustrated example, the outer wall **10** and the partition walls **12** are formed integrally. In this embodiment, the conductive ceramic material for forming the outer wall **10** and the conductive ceramic material for forming the partition walls **12** are the same. Further, the outer wall **10** and the partition walls **12** may be formed separately. In this case, the conductive ceramic material for forming the outer wall **10** and the conductive ceramic material for forming the partition walls **12** may be the same or different.

The outer wall **10** has a tubular shape in accordance with the shape of the honeycomb structure **1.** In FIG. **1** to FIG. **10****,** the outer wall **10** has a rectangular tube shape. The thickness of the outer wall **10** may be, for example, from 0.5 mm to 10 mm, and may also be, for example, from 1 mm to 8 mm.

The partition walls **12** define the plurality of cells **13.** More specifically, the partition walls **12** include first partition walls **12a** and second partition walls **12b** that are orthogonal to each other, and the first partition walls **12a** and the second partition walls **12b** define the plurality of cells **13.** The configuration of the partition walls is not limited to the partition walls **12** described above. The partition walls may include first partition walls extending in a radial direction and second partition walls extending in a circumferential direction, and the first partition walls and the second partition walls may define the plurality of cells.

Although not shown, a functional layer according to the use of the heat generating device **100** may be formed on a surface of the partition wall **12.** When the functional layer is formed on the surface of the partition wall **12,** a portion (typically, center portion) in a cross section of the cell **13** in which the functional layer is not formed is configured as a flow passage. The functional layer may be formed on an entire inner surface of the partition wall **12** or on a part of the surface of the partition wall **12.**

The thickness of the partition wall **12** may be set appropriately in accordance with the use of the honeycomb structure. Typically, the thickness of the partition wall **12** is smaller than the thickness of the outer wall **10.** The thickness of the partition wall **12** may be, for example, from 0.05 mm to 1.0 mm, and may also be, for example, from 0.08 mm to 0.6 mm. The thickness of the partition wall is measured, for example, by cross-section observation with a scanning electron microscope (SEM). When the thickness of the partition wall falls within such ranges, the mechanical strength of the honeycomb structure can be improved, and an opening area (total area of the cells in the cross section) can be increased.

The partition wall **12** is basically a dense body, and a porosity in the partition wall **12** is, for example, 10% or less, preferably 5% or less. The porosity may be measured, for example, by mercury porosimetry.

A density of the partition wall 12 is, for example, 0.4 g/cm³ or more, preferably 0.5 g/cm³ or more, and for example, 6 g/cm³ or less, preferably 5 g/cm³ or less. The density may be measured, for example, by the mercury porosimetry.

### D. First Electrode and Second Electrode

Typically, each of the first electrode **2** and the second electrode **3** is provided directly on the profile surface **11** of the honeycomb structure **1.** Any suitable metal may be adopted as a material for the electrode (first electrode or second electrode). Although not shown, each of the first electrode **2** and the second electrode **3** can be electrically connected to a power source.

### Industrial Applicability

The heat generating device according to the embodiment of the present invention can be used in various industrial products, and may be suitably used particularly as filters.

### Reference Signs List

- **1**: honeycomb structure
- **10**: outer wall
- **12**: partition wall
- **13**: cell
- **17**: first slit
- **18**: second slit
- **2**: first electrode
- **3**: second electrode
- **100**: heat generating device

## Claims

1. A heat generating device, comprising:
a honeycomb structure including:
an outer wall; and
partition walls, which are arranged inside the outer wall, and define a plurality of cells extending from a first end surface to a second end surface;
a first electrode provided on a profile surface of the honeycomb structure; and
a second electrode, which is provided on the profile surface of the honeycomb structure, and is located away from the first electrode,
wherein the profile surface of the honeycomb structure includes:
a first portion located between the first electrode and the second electrode; and
a second portion located on a side opposite to the first portion with respect to a center of a cross section of the honeycomb structure taken along a direction orthogonal to an extending direction of the cells, and
wherein the honeycomb structure has a first slit extending from the first portion toward the second portion.

2. The heat generating device according to claim 1,
wherein the honeycomb structure has a substantially quadrangular shape in the cross section taken along the direction orthogonal to the extending direction of the cells,
wherein the honeycomb structure includes:
a first profile surface and a second profile surface that are arranged apart from each other in a first direction orthogonal to the extending direction of the cells; and
a third profile surface and a fourth profile surface that are arranged apart from each other in a second direction orthogonal to the extending direction of the cells and to the first direction,
wherein the first electrode and the second electrode are provided on the first profile surface, and the first profile surface includes the first portion, and
wherein the second profile surface includes the second portion.

3. The heat generating device according to claim 1 or 2, wherein the first slit has a substantially wedge shape that becomes narrower as the first slit extends away from the first portion in the cross section taken along the direction orthogonal to the extending direction of the cells.

4. The heat generating device according to claim 1 or 2, wherein an interior of the first slit is hollow.

5. The heat generating device according to claim 1 or 2, wherein an interior of the first slit is filled with a filler.

6. The heat generating device according to claim 1 or 2,
wherein the first slit comprises a plurality of first slits, and
wherein the honeycomb structure further has a second slit, which extends from the second portion toward the first portion, and is located between first slits arranged adjacent to each other among the plurality of first slits.

7. The heat generating device according to claim 6, wherein a sum of the number of the first slits located between the first electrode and the second electrode and the number of the second slit located between the first electrode and the second electrode is an odd number.

8. The heat generating device according to claim 6, wherein the second slit has a substantially wedge shape that becomes narrower as the second slit extends away from the second portion in the cross section taken along the direction orthogonal to the extending direction of the cells.

9. The heat generating device according to claim 6, wherein an interior of the second slit is hollow.

10. The heat generating device according to claim 6, wherein an interior of the second slit is filled with a filler.

11. The heat generating device according to claim 1 or 2, wherein the honeycomb structure is made of a conductive ceramic material.
